# EUROPÄISCHE PATENTSCHRIFT

(11) **EP 1 321 019 B1**
(45) Veröffentlichungstag und Bekanntmachung des Hinweises auf die Patenterteilung: **27.12.2006**
(21) Anmeldenummer: 02102748.7
(22) Anmeldetag: 13.12.2002
(51) Int. Cl.: A01B 73/06, A01C 7/08

(54) **Sämaschine**
Sowing machine
Semoir

(30) Priorität: 18.12.2001 US 21642
(43) Veröffentlichungstag der Anmeldung: 25.06.2003
(73) Patentinhaber: DEERE & COMPANY, Moline, Illinois 61265-8098 (US)
(72) Erfinder: Meyer, Bradley, John, 52806, Davenport (US); Hall, Thomas, LeRoy, 52806, Davenport (US); Bennett, Robert, Edwin, 61265, Moline (US); Graham, William, Douglas, 61244, East Moline (US)
(74) Vertreter: Holst, Sönke

(56) Entgegenhaltungen:
- DE-A- 4 326 125
- US-A- 4 214 637
- US-A- 4 721 168
- US-A- 5 406 897
- US-B1- 6 202 756
- US-B1- 6 305 478

## Beschreibung

Die Erfindung betrifft eine Sämaschine nach dem Oberbegriff des Anspruchs 1.

Landwirtschaftliche Geräte, wie Sämaschinen, haben eine breite, sich quer zur Fahrtrichtung erstreckende Arbeitskonfiguration, so dass die Maschine bei einer einzigen Überfahrt eine möglichst große Bodenfläche abdeckt. Die Sämaschine kann typischerweise aus ihrer Arbeitskonfiguration in eine besser handhabbare Transportkonfiguration gefaltet werden.

Manche Sämaschinen sind mit einem Rahmen ausgestattet, der ein mittiges Hauptrahmensegment und zwei Flügelrahmensegmente umfasst. Das mittige Hauptrahmensegment ist mit einer sich nach vorn erstreckenden Zugstange oder Deichsel zum Ankoppeln der Maschine an einen Traktor ausgestattet. Die Flügelrahmensegmente sind durch sich von vorn nach hinten erstreckende Achsen an den Hauptrahmen gekoppelt, so dass die Flügel sich gegenüber dem Hauptrahmen bewegen können, um es den Flügelrahmensegmenten zu erlauben, den Konturen des Bodens näher zu folgen. Einzelne Pflanzeinheiten sind an den Rahmensegmenten durch Parallelogrammlenker befestigt, so dass die Pflanzeinheiten sich gegenüber dem jeweiligen Rahmensegment um einen begrenzten Betrag nach oben und unten bewegen können. Ein Verfahren zum Falten des Rahmens der oben beschriebenen Sämaschine ist, die Flügel nach vorn entlang der Zugstange zu falten.

Um näher beabstandete Reihen zu pflanzen, ist es bekannt, die Pflanzeinheiten alternierend anzuordnen. Alle Pflanzeinheiten können verwendet werden, um eine Gutart in engen Reihen zu pflanzen, oder auswählbare Pflanzeinheiten können angehoben werden, um eine Gutart in weiteren Reihen zu pflanzen.

Es ist auch bekannt, Pflanzeinheiten auf ihren Nasen aus einer horizontalen Pflanzposition in eine vertikalere Nicht-Pflanzposition zu verschwenken.

Die als gattungsbildend angesehene US 6 202 756 A beschreibt eine landwirtschaftliche Sämaschine mit einem aus drei Abschnitten aufgebauten Rahmen. Die Seitenteile sind um die Hochachse schwenkbar am Mittelteil des Rahmens angelenkt. Am Seitenteil ist ein Rahmenelement um eine horizontale Achse schwenkbar angelenkt, das eine Pflanzeinheit trägt.

Die der Erfindung zu Grunde liegende Aufgabe wird darin gesehen, einen verbesserten faltbaren Rahmen für ein landwirtschaftliches Gerät bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Sämaschine umfasst einen Hauptrahmen und zwei Flügelrahmen. In ihrer Arbeitskonfiguration erstreckt sich die Sämaschine quer zur Vorwärtsfahrtrichtung. In der Transportposition sind die Flügelrahmen eingefaltet, insbesondere nach vorn; es wäre aber auch denkbar sie nach hinten oder oben zu falten. Alle drei Rahmen sind mit Pflanzeinheiten ausgestattet, die vorzugsweise eine vordere Reihe mit Pflanzeinheiten und eine hintere Reihe mit Pflanzeinheiten bilden und untereinander seitlich versetzt sind. Insbesondere die hinteren Reihen der Pflanzeinheiten sind an den Flügelrahmen durch Schwenkarme angelenkt, die sich von den Flügelrahmen in der Regel nach unten und hinten erstrecken. Die Schwenkarme haben eine Arbeitsposition, in der die Pflanzeinheiten in ihrer Arbeitsposition sind, und eine Transportposition, in der die Pflanzeinheiten auf ihren Nasen in ihre im Wesentlichen vertikale Transportposition verschwenkt sind. Durch das Drehen der Pflanzeinheiten an den Flügelrahmen auf ihre Nasen wird die Transportbreite der Sämaschine vermindert. Die Pflanzeinheiten können in der Transportkonfiguration des Flügelrahmens durch einen Antrieb, der den Flügelrahmen bewegt, oder einen separaten Antrieb, der manuell oder selbsttätig aktiviert wird, wenn der Flügelrahmen in die Transportkonfiguration verbracht wird, in ihre Transportposition verbracht werden. Die Schwenkarme sind durch eine Schwenkwelle an den Flügelrahmen schwenkbar befestigt, die mit einem Schwenkhebel verbunden ist. Ein linearer Aktor, insbesondere ein hydraulischer oder pneumatischer Zylinder, bewegt den Schwenkhebel, der wiederum den Schwenkarm verschwenkt.

Die Schwenkarme ermöglichen es weiterhin, die Pflanzeinheiten in eine Zwischenposition zu verbringen, in der sie sich nicht mehr im Bodenkontakt befinden. Diese mittlere Nicht-Arbeitsposition ermöglicht ein Säen mit einem größeren Reihenabstand, da jede zweite Pflanzeinheit deaktiviert ist.

In einer bevorzugten Ausführungsform ist die Pflanzeinheit durch einen Parallelogrammlenker am Schwenkarm befestigt. Er ermöglicht es ihr, unabhängig vom Schwenkarm den Konturen des Bodens zu folgen.

In der Zeichnung ist ein nachfolgend näher beschriebenes Ausführungsbeispiel der Erfindung dargestellt. Es zeigt:
- Fig. 1: eine Seitenansicht einer erfindungsgemäßen Sämaschine in ihrer Arbeitskonfiguration,

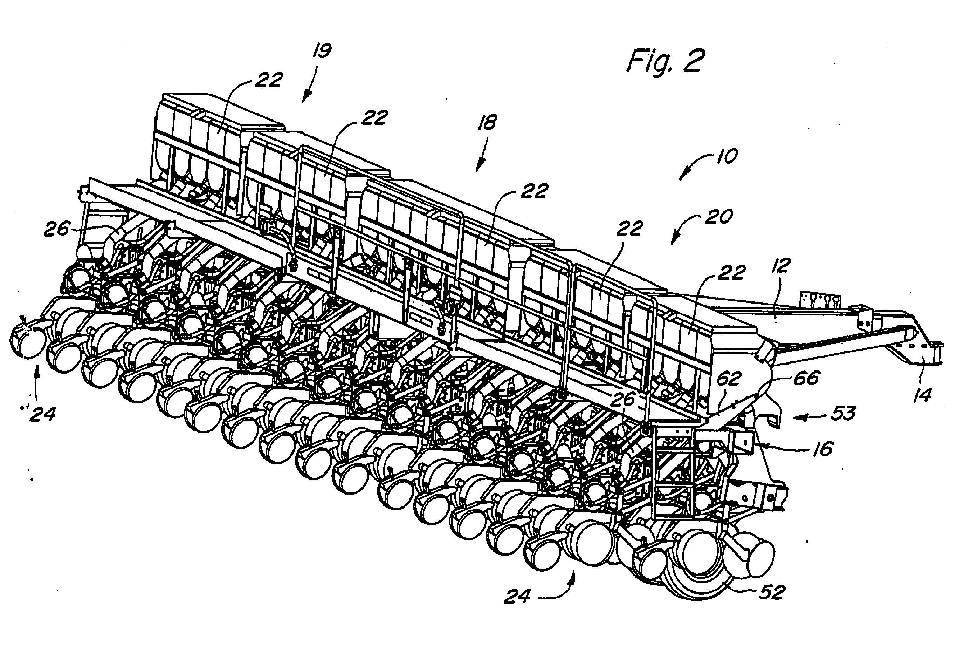

- Fig. 2: eine rückwärtige perspektivische Ansicht einer erfindungsgemäßen Sämaschine mit angehobenen Pflanzeinheiten,
- Fig. 3: eine rückwärtige perspektivische Ansicht einer erfindungsgemäßen Sämaschine in ihrer Transportkonfiguration,

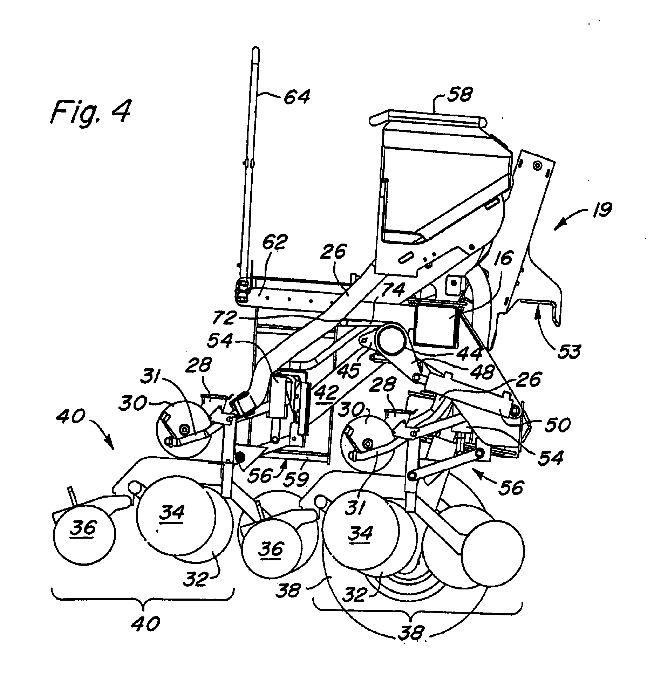

- Fig. 4: eine Seitenansicht eines Flügelrahmensegments der in Figur 2 dargestellten Sämaschine von links,
- Fig. 5: eine Seitenansicht eines Flügelrahmensegments der in Figur 3 dargestellten Sämaschine von links,
- Fig. 6: eine Seitenansicht eines Flügelrahmensegments einer erfindungsgemäßen Sämaschine von rechts, wobei die hintere Reihe der Pflanzeinheiten sich in ihrer mittleren Halteposition befindet,
- Fig. 7: einen teilweisen Querschnitt entlang der Linien 7-7 der Figur 6,
- Fig. 8: eine perspektivische Ansicht einer Reihe von Saatgutbehältern einer erfindungsgemäßen Sämaschine,
- Fig. 9: eine Explosionsansicht der Reihe von Saatgutbehältern aus Figur 8 mit dem abnehmbaren Deckel, und
- Fig. 10: eine perspektivischer Querschnittsansicht der Reihe an Saatgutbehältern.

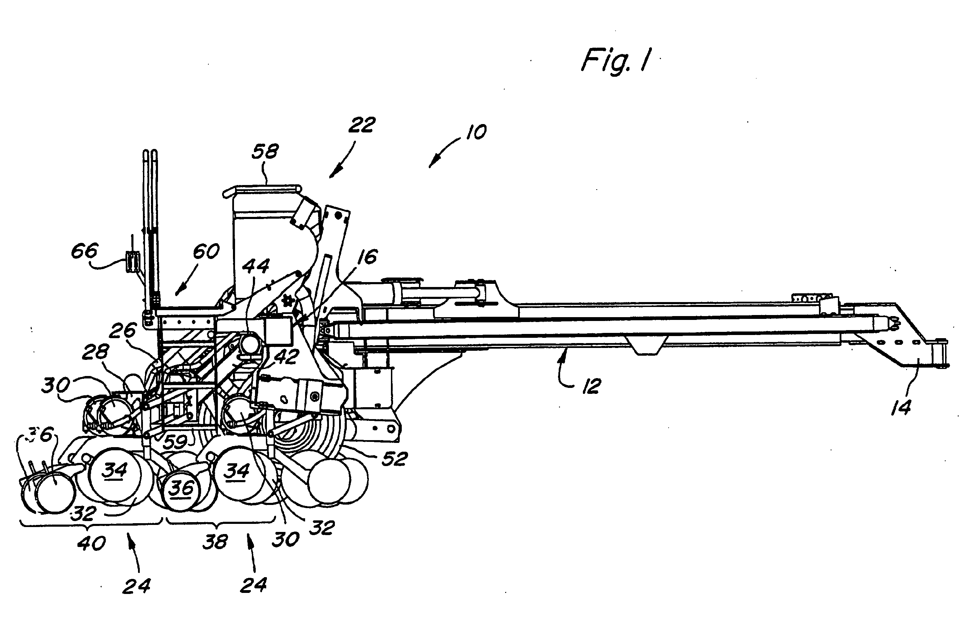

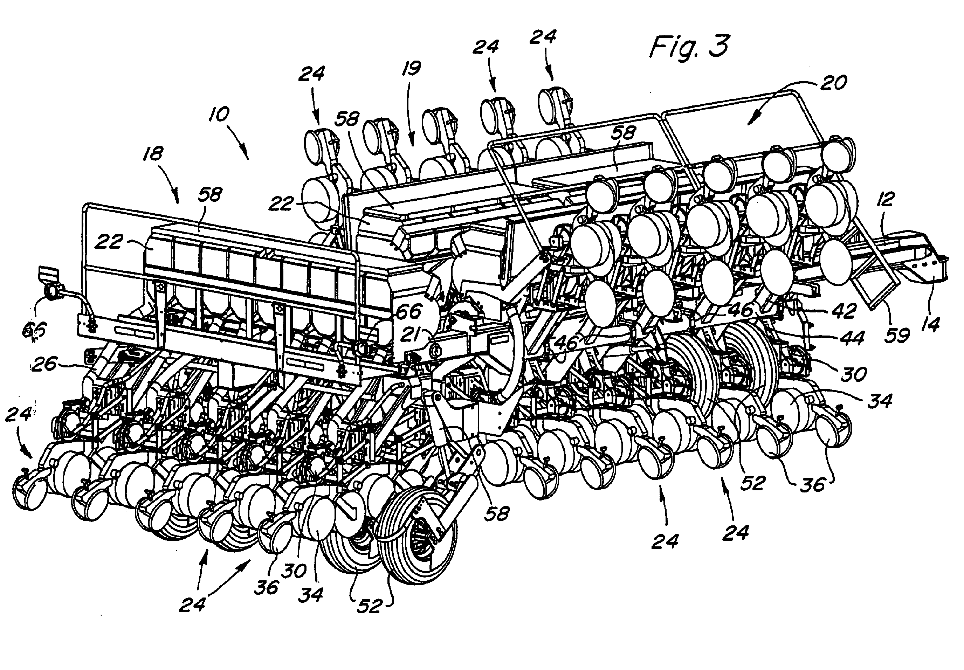

Figur 1 ist eine Seitenansicht eines gezogenen landwirtschaftlichen Arbeitsgeräts in Form einer Sämaschine 10. Die Sämaschine 10 ist durch eine Deichsel 12 oder einen Zugbalken mit einer Kupplung 14 an einen Traktor gekoppelt. Die Deichsel 12 erstreckt sich von einem Rahmen 16 nach vorn. Der Rahmen 16 umfasst drei Rahmensegmente, einen Hauptrahmen 18 sowie einen linken und einen rechten Flügelrahmen 19 und 20. Die Flügelrahmen 19 und 20 können gegenüber dem Hauptrahmen 18 um linke und rechte, sich von vorn nach hinten erstreckende Schwenklager 21 verschwenkt werden. Diese sich von vorn nach hinten erstreckenden Schwenklager 21 erlauben es den Flügelrahmen 19 und 20, besser der Kontur des Bodens zu folgen, wenn die Sämaschine 10 über ein Feld gezogen wird. Die Flügelrahmen 19 und 20 können auch um sich vertikal erstreckende Schwenklager nach vorn gefaltet werden, so dass die Sämaschine 10 dann die in Figur 3 gezeigte Transportkonfiguration annimmt.

Jedes der Rahmensegmente 18, 19 und 20 ist mit Reihen von Saatgutbehältern 22 ausgestattet. Die Reihen von Saatgutbehältern 22 führen Saatgut durch flexible Rohre 26 einzelnen Pflanzeinheiten 24 zu. In der dargestellten Ausführungsform umfasst jede Pflanzeinheit 24 einen zusätzlichen Behälter 28, ein Messsystem 30, einen Furchenöffner 32, Tiefeneinstellräder 34 und Furchenschließräder 36. Saatgut wird durch das flexible Rohr 26 in die zusätzlichen Behälter 28 geleitet. Das Saatgut wird dann durch das Messsystem 30 abgemessen. Bei der dargestellten Ausführungsform ist das Messsystem 30 ein Vakuum-Messsystem, das an einer Vakuumleitung 31 angeschlossen ist. Das abgemessene Saatgut wird dann einem nicht dargestellten Saatgutrohr zugeführt, welche das Saatgut in die vom Furchenöffner 32 geformte Pflanzfurche leitet. Die Pflanzfurche wird dann durch die Furchenschließräder 36 geschlossen, die das Saatgut in der geschlossenen Pflanzfurche einschließen.

Die Pflanzeinheiten 24 sind an jedem Rahmensegment 18, 19 und 20 in einer vorderen Reihe 38 und einer hinteren Reihe 40 angeordnet. Die vorderen Reihen 38 der Pflanzeinheiten 24 sind direkt an den Rahmensegmenten 18, 19 und 20 befestigt, so dass die vorderen Reihen 38 sich mit dem jeweiligen Rahmensegment bewegen. In ähnlicher Weise ist die hintere Reihe 40 der Pflanzeinheiten 24 des Hauptrahmens am Hauptrahmensegment 18 befestigt, so dass sie sich mit dem Hauptrahmensegment 18 bewegen. Die hinteren Reihen 40 der an den Flügelrahmensegmenten 19 und 20 befestigten Pflanzeinheiten 24 sind an Schwenkarmen 42 befestigt, die sich von einer Schwenkwelle 44 nach unten und hinten erstrecken. Die Schwenkwelle 44 ist durch Lagerungen 46 drehbar mit dem Flügelrahmensegment 20 drehbar gekoppelt. Ein Winkelhebel 48, der durch einen Linearmotor 50 angetrieben wird, dreht die Schwenkwelle 44. In der dargestellten Ausführungsform ist der Linearmotor 50 ein doppeltwirkender hydraulischer Zylinder. Die Pflanzeinheiten 24 der vorderen Reihe 38 und der hinteren Reihe 40 sind miteinander alternierend (versetzt) angeordnet.

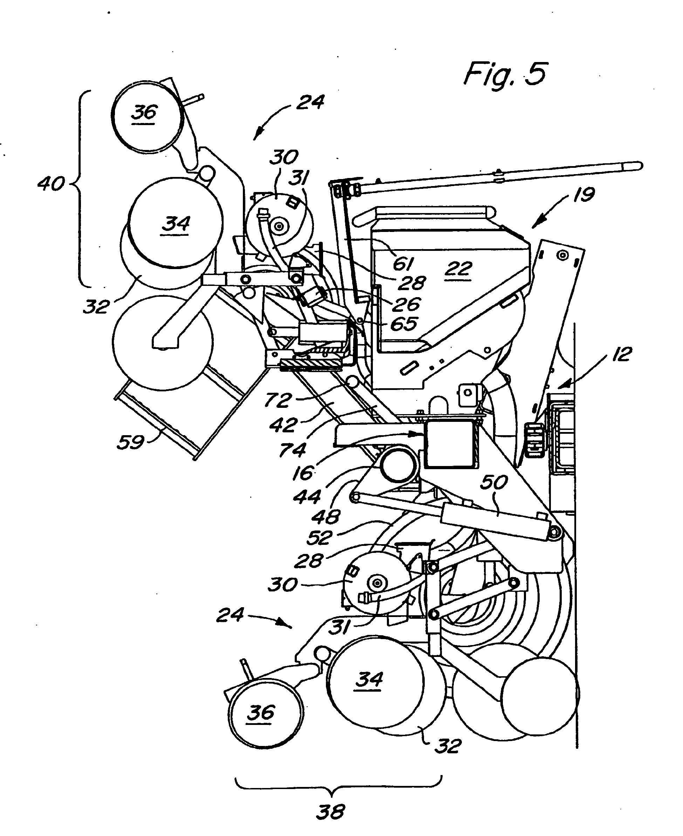

Die Schwenkarme 42 können durch die Linearmotoren 50, die die jeweiligen Winkelhebel 48 der Schwenkwelle 44 antreiben, aus ihrer in Figur 1 dargestellten Arbeitsposition in ihre in den Figuren 3 und 5 dargestellte Transportposition gedreht werden. Auf diese Weise werden die hinteren Reihen 40 der Pflanzeinheiten 24 in ihre im Wesentlichen vertikalen Transportpositionen gedreht, wenn die Flügelrahmenabschnitte 19 und 20 nach vorn gedreht werden, wie in den Figuren 3 und 5 gezeigt, was die Sämaschine 10 mit einer kleineren Transportbreite ausstattet. Die Schwenkwelle 44 ist mit angetriebenen Schwenkhebeln 45 versehen, die Hubverbindungen 47 aufweisen.

Die Rahmensegmente 18, 19 und 20 sind mit Bodenrädern 52 ausgestattet. Die Bodenräder 52 berühren den Boden, wenn die Sämaschine 10 in ihrer Arbeitskonfiguration ist. Nach unten gerichteter Druck wird durch einen pneumatischen Niederdrückzylinder 54 auf jede Pflanzeinheit 24 ausgeübt. Der pneumatische Niederdrückzylinder 54 erstreckt sich jeweils zwischen dem Hauptrahmensegment 18 und den Flügelrahmensegmenten 19 und 20 und den vorderen Reihen 38 der Pflanzeinheiten 24 sowie zwischen dem Hauptrahmensegment 18 und der hinteren Reihe 40 der Pflanzeinheiten 24. Für die hintere Reihe 40 der Pflanzeinheiten 24 an den Flügelrahmensegmenten 19 und 20 erstreckt sich der pneumatische Niederdrückzylinder 54 zwischen dem Schwenkarm 42 und den Pflanzeinheiten 24. Die pneumatischen Niederdrückzylinder 54 greifen an einer Parallelogrammführung 56 an, die die Pflanzeinheiten 24 mit den jeweiligen Rahmensegmenten 19 und 20 und den Schwenkarmen 42 verbindet. Die Parallelogrammführung 56 erlaubt den Pflanzeinheiten 24, dem Boden gegenüber den Rahmensegmenten 18, 19 und 20 und den Schwenkarmen 42 zu folgen.

Wenn die Sämaschine 10 von ihrer Arbeitskonfiguration in ihre Transportkonfiguration bewegt wird, werden die Bodenräder 52 des Hauptrahmensegments 18 durch hydraulische Zylinder 58 ausgefahren, so dass der Rahmen 16 angehoben wird. Die Flügelrahmensegmente 19 und 20 werden nach vorn verschenkt, bis sie mit Sperrhaken 53 an der Deichsel 12 angreifen. Die Linearmotoren 50 werden ausgestreckt, so dass die Schwenkwellen 44 mittels der Winkelhebel 48 verschwenkt werden. Auf diese Weise werden die Schwenkarme 42 und die daran angebrachten Pflanzeinheiten 24 aus ihrer Arbeitsposition in ihre Transportposition gedreht.

Die Saatgutbehälter 22 sind mit Zugangsdeckeln 58 ausgestattet, um den Innenraum der Saatgutbehälter 22 zugänglich zu machen. Um die Saatgutbehälter 22 zu füllen, steigt der Bediener über Stufen 59 auf den Laufsteg 60 für den Bediener und öffnet die Zugangsdeckel 58. Der Laufsteg 60 ist oberhalb der Reiheneinheiten 24 angeordnet, wenn sie sich in ihrer Arbeitsposition befinden. Der Laufsteg 60 umfasst eine Fußplatte 61 und einen Laufstegrahmen 62. Der Laufstegrahmen 62 ist mit Relingen 64 und Warnlichtern 66 ausgestattet. Die Fußplatte 61 an jedem der Flügelrahmensegmente 19, 20 ist durch einen Fußplattenstift 65 schwenkbar mit einem Laufstegrahmen 62 verbunden. Der Laufstegrahmen 62 ist mit den Flügelrahmensegmenten 19 und 20 durch einen Laufstegrahmenstift 66 schwenkbar verbunden. Der Laufstegrahmenstift 66 definiert eine zweite Schwenkachse, die parallel zur ersten Schwenkachse ist, die durch die Schwenkwelle 44 definiert wird. In ähnlicher Weise definiert der Fußplattenstift 65 eine dritte Schwenkachse, die parallel zur ersten und zweiten Schwenkachse ist.

Wenn sich der Linearmotor 50 ausstreckt, dreht er die Schwenkwelle 44, indem er den angetriebenen Schwenkhebel 45 dreht und die Hubverbindung 47 bewegt. Die Hubverbindung 47 ist mit dem Laufstegrahmen 62 durch einen Hubverbindungsstift 68 gekoppelt. Die Hubverbindung 47 ist mit einem Schlitz 49 für eine Leerbewegung ausgestattet. Der Schlitz 49 erlaubt es den Schwenkarmen 42, einen begrenzten Betrag angehoben zu werden, bevor der Laufstegrahmen 62 gegenüber den Flügelrahmensegmenten 19 und 20 verschwenkt wird. Wenn die Hubverbindung 47 am Laufstegrahmen 62 angreift, werden der Laufstegrahmen 62 und die Fußplatte 61 um die Laufstegschwenkachse (zweite Schwenkachse) verschwenkt, welche durch den Laufstegrahmenstift 66 definiert wird. Eine weitere Drehung der Schwenkwelle 44 bedingt, dass die hinteren Reihen 40 der Pflanzeinheiten 24 für die Flügelrahmensegmente 19 und 20 an den Fußplatten 61 anschlagen. An den Pflanzeinheiten 24 befestigte Puffer 70 greifen an der Unterseite der Fußplatte 61 an. Die Puffer 70 schwenken die Fußplatte 61 selbsttätig um die Fußplattenschwenkachse (dritte Schwenkachse), die durch den Fußplattenstift 65 definiert wird, gegenüber dem Laufstegrahmen 62. In ihrer endgültigen Transportposition sind die Fußplatten 61 in der Art eines Sandwichs zwischen den Saatgutbehältern 22 und den hinteren Reihen 40 der Pflanzeinheiten 24 der Flügelrahmensegmente 19, 20 angeordnet.

Sich quer erstreckende Rohrträger 72 sind durch Verbindungen 74 schwenkbar an den Flügelrahmenabschnitten 19 und 20 angebracht. Die Rohrträger 72 sind unterhalb der Laufstege 60 für den Bediener angeordnet und stützen die flexiblen Rohre 26 für die hinteren Reihen 40 der Pflanzeinheiten 24 ab. Die Rohrträger 72 ruhen auf der Schwenkwelle 44, wenn sich die Sämaschine 10 in ihrer Arbeitskonfiguration befindet. Wenn die Schwenkarme 42 in ihre Transportposition geschwenkt werden, berühren die Schwenkarme 42 den Rohrträger 72, so dass die Rohrträger 72 mit den Schwenkarmen 42 angehoben werden. Die Rohrträger 72 heben die flexiblen Rohre 26 an und schützen sie vor dem Knicken, wenn die Pflanzeinheiten 24 in ihre Transportpositionen angehoben werden.

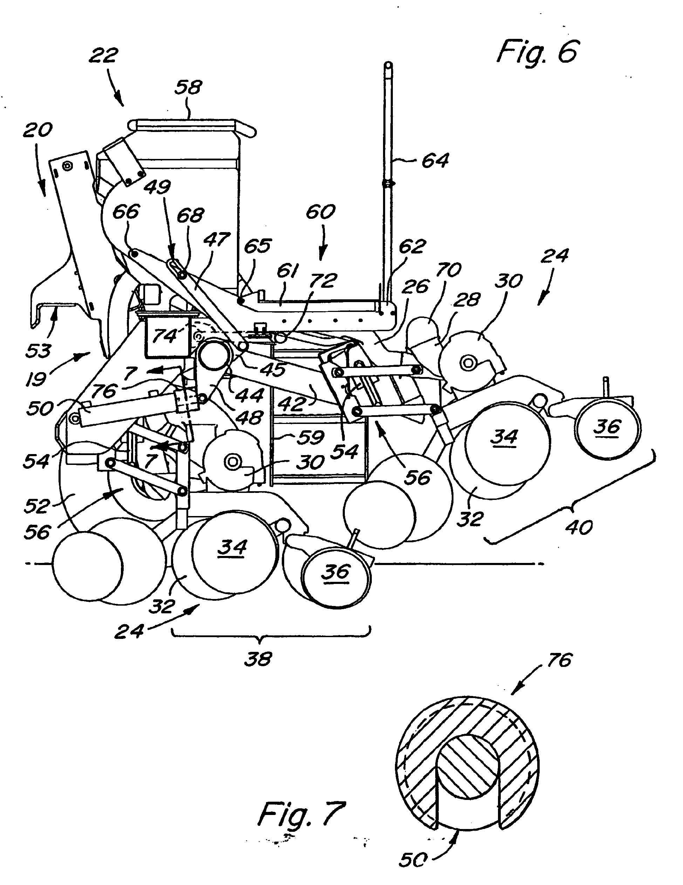

Wie in Figur 6 gezeigt, hat die Sämaschine 10 eine zweite Arbeitskonfiguration, in der die vorderen Reihen 38 der Pflanzeinheiten 24 zum Pflanzen verwendet werden und die zweiten Reihen 40 der Pflanzeinheiten 24 durch die Schwenkarme 42 in eine mittlere Halteposition nach oben verschwenkt sind. In der mittleren Halteposition befinden sich die hinteren Reihen 40 der Pflanzeinheiten 24 nicht mehr im Kontakt mit dem Boden und nur die vorderen Reihen 38 der Pflanzeinheiten 24 bringen Saatgut in den Boden ein. Auf diese Weise können die vorderen Reihen 38 der Pflanzeinheiten 24 verwendet werden, mit einem größeren Reihenabstand zu pflanzen, als wenn die hintere Reihe 40 der Pflanzeinheiten 24 genutzt würde. Wenn sich beispielsweise die hinteren Reihen 40 in ihrer mittleren Halteposition befinden, können die vorderen Reihen 38 der Pflanzeinheiten 24 verwendet werden, Mais mit Reihenabständen von 75 cm zu pflanzen. Wenn die hinteren Reihen 40 der Pflanzeinheiten 24 abgesenkt sind, kann die Sämaschine 10 genutzt werden, um Sojabohnen in Reihen mit 37,5 cm Abstand zu pflanzen. Um die hinteren Reihen 40 der Pflanzeinheiten 24 in der mittleren Halteposition zu halten, ist ein U-förmiger Anschlag 76 bereitgestellt, der über den Linearmotor 50 passt und das Einziehen des hydraulischen Zylinders verhindert.

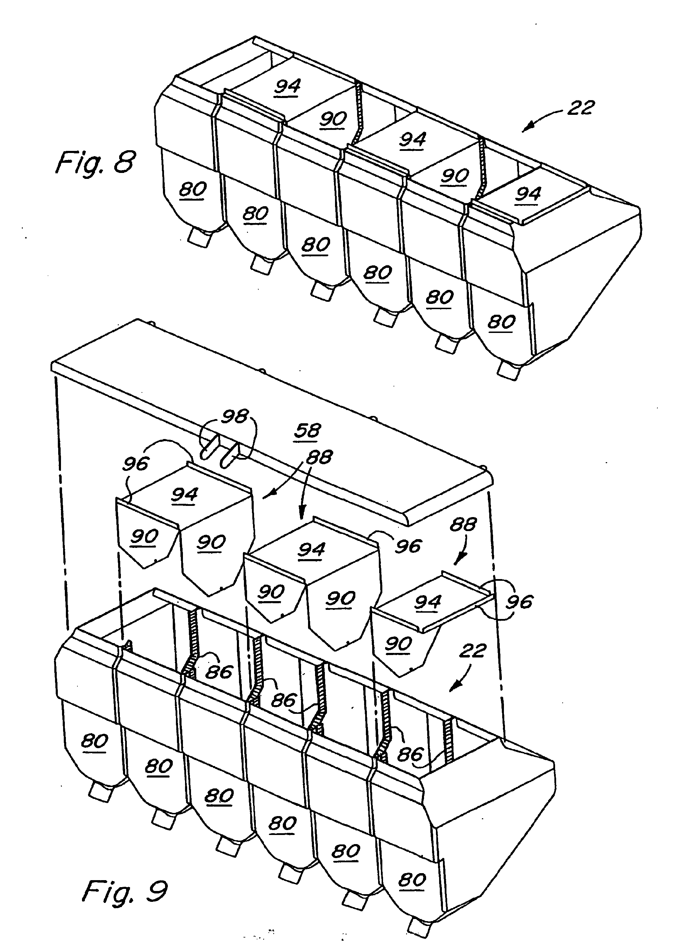

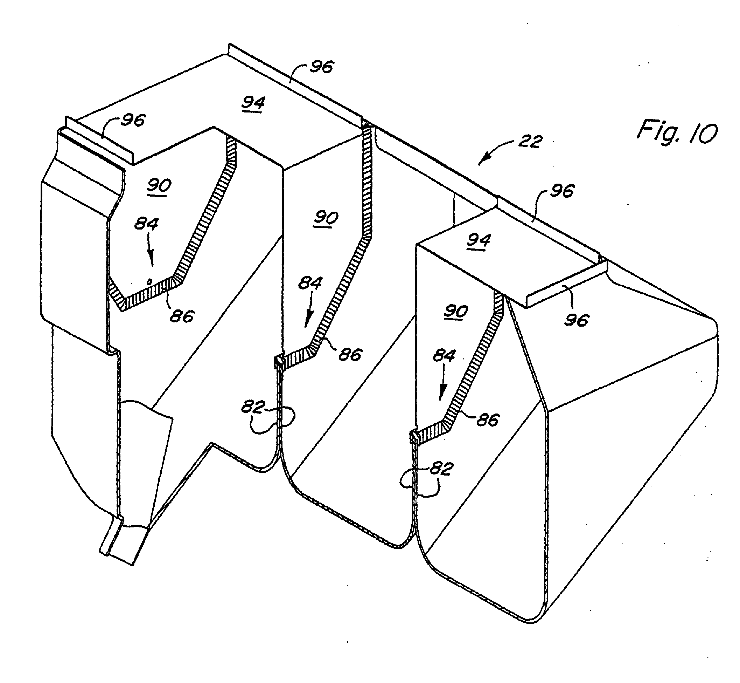

Eine Reihe an Saatgutbehältern 22 ist am Besten in den Figuren 8 bis 10 illustriert. Die Reihe an Saatgutbehältern 22 umfasst eine Reihe einzelner Behälter 80 aus Kunststoff, die aneinander angrenzende Wände 82 haben. Die aneinander angrenzenden Wände 82 sind mit Ausschnitten 84 versehen, so dass Saatgut von einem einzelnen Behälter 80 in einen anderen fließen kann, wenn sowohl die vordere Reihe 38 als auch die hintere Reihe 40 der Pflanzeinheiten 24 sich in ihrer Arbeitsstellung befindet. Die Ausschnitte 84 werden durch eine Dichtung 86 umrundet, die über die angrenzenden Wände 82 der einzelnen Behälter 80 hinausragt. Wenn die hinteren Reihen 40 in ihre mittlere Halteposition angehoben werden, wird nur die Hälfte der Pflanzeinheiten 24 genutzt, so dass alternierend einzelne Behälter 80 nichtarbeitende Pflanzeinheiten 24 versorgen. Daher ist die Reihe an Saatgutbehältern 22 mit entfernbaren Leiteinrichtungen 88 ausgestattet, die sich nach unten erstreckende Beine 90 haben, die an den angrenzenden Wänden 82 der einzelnen Behälter 80 anliegen. Die sich nach unten erstreckenden Beine 90 wirken mit den Ausschnitten 84 zusammen, um einen arbeitenden einzelnen Behälter 80 gegenüber dem angrenzenden nicht-arbeitenden einzelnen Behälter 80 abzudichten. Die Beine 90 sind mit einer horizontalen Abdeckung 94 ausgestattet, die verhindert, dass Saatgut in dem nicht-arbeitenden Behälter 80 abgelegt wird. Es ist anzumerken, dass es zwei Typen von Leiteinrichtungen 88 gibt: die am weitesten rechts angeordnete Leiteinrichtung 88 in den Figuren 8 bis 10 dichtet einen Endbehälter 80 ab, und die anderen beiden illustrierten Leiteinrichtungen 88 dichten nichtarbeitende Behälter 80 ab, die zwischen arbeitenden Behältern 80 angeordnet sind. Die Leiteinrichtung 88 für den Endbehälter 80 ist mit einem sich nach unten erstreckenden Bein 90 ausgestattet, während die anderen beiden Leiteinrichtungen 88 mit zwei sich nach unten erstreckenden Beinen 90 versehen sind. Die Abdeckungen 94 der Leiteinrichtungen 88 sind mit sich nach oben erstreckenden Lippen 96 ausgestattet. Die sich nach oben erstreckenden Lippen 96 greifen an der ausgesparten Unterseite des Zugangsdeckels 58 an, um die Position der Leiteinrichtungen 88 gegenüber den einzelnen Behältern 80 besser zu fixieren. Der Zugangsdeckel 58 ist durch Scharnierarme 98 schwenkbar an den Rahmensegmenten 18, 19 und 20 befestigt.

Es wäre denkbar, ein mechanisches Messsystem oder ein pneumatisches, mit Überdruck arbeitendes Messsystem anstelle des in der obigen Beschreibung offenbarten Vakuummesssystems zu verwenden. Das Saatgut könnte den Behältern 80 der einzelnen Pflanzeinheiten 24 durch ein System auf Anfrage von einem zentralen Behälter zugeführt werden, anstelle der Verwendung des in der obigen Beschreibung offenbarten, mit der Schwerkraft arbeitenden Systems.

## Patentansprüche

1. Sämaschine (10) mit einem Hauptrahmen (18), einem Flügelrahmen (19, 20), der schwenkbar mit dem Hauptrahmen (18) verbunden ist, so dass er von einer Arbeitskonfiguration in eine Transportkonfiguration verschwenkbar ist, einem Saatgutbehälter (22) zur Aufnahme von Saatgut, und einem schwenkbar am Flügelrahmen (19, 20) angelenkten Schwenkarm (42), der zwischen einer Arbeitsposition und einer Transportposition beweglich ist, wobei
der Schwenkarm (42) durch einen Antrieb, der den Flügelrahmen (19, 20) bewegt, oder einen separaten Antrieb, der manuell oder selbsttätig aktivierbar ist, wenn der Flügelrahmen (19, 20) in die Transportkonfiguration verbracht wird, in seine Transportposition verbringbar ist, am Schwenkarm (42) eine Pflanzeinheit (24) angebracht ist, die im Bodenkontakt ist, wenn sich der Schwenkarm (42) in seiner Arbeitsposition befindet und vertikal verschwenkt ist, wenn der Schwenkarm (42) in seiner Transportstellung ist, und
sich ein flexibles Rohr (26) zwischen dem Saatgutbehälter (22) und der Pflanzeinheit (24) erstreckt, um ihr Saatgut aus dem Saatgutbehälter (22) zuzuführen,
**dadurch gekennzeichnet, dass** ein erstes Ende des Schwenkarms (42) durch eine Schwenkwelle (44), die einen Winkelhebel (48) umfasst, schwenkbar mit dem Flügelrahmen (19, 20) gekoppelt ist, wobei die Schwenkwelle (44) eine erste Schwenkachse definiert, um die der Schwenkarm (42) verschwenkt wird
und sich ein Linearmotor (50) zwischen dem Flügelrahmen (19, 20) und dem Winkelhebel (48) erstreckt, um die Schwenkwelle (44) gegenüber dem Flügelrahmen (19, 20) zu drehen und **dadurch** den Schwenkarm (42) zu verschwenken.

2. Sämaschine (10) nach Anspruch 1, **dadurch gekennzeichnet, dass** der Schwenkarm (42) eine Zwischenposition zwischen der Arbeitsposition und der Transportposition hat, in der sich die Pflanzeinheit (24) nicht mehr im Bodenkontakt befindet.

3. Sämaschine nach Anspruch 1 oder 2, **dadurch gekennzeichnet, dass** der Linearmotor (50) ein Hydraulikzylinder ist.

4. Sämaschine nach einem der Ansprüche 1 bis 3, **dadurch gekennzeichnet, dass** die Pflanzeinheit (24) durch einen Parallelogrammlenker (56) am Schwenkarm (42) befestigt ist, der es der Pflanzeinheit (24) ermöglicht, dem Boden unabhängig von dem Schwenkarm (42) zu folgen, wenn er sich in seiner Arbeitsposition befindet.

## Claims

1. A seeder (10) with a main frame (18), a wing frame (19, 20) which is pivotally connected to the main frame (18), so that it can be turned from a working configuration into a transport configuration, a seed container (22) for reception of seeds, and a pivot arm (42) which is pivotally attached to the wing frame (19, 20) and can move between a working position and a transport position, wherein
the pivot arm (42) can be brought into its transport position, when the wing frame (19, 20) is brought into the transport position, by a drive means which moves the wing frame (19, 20) or a separate drive means which can be activated manually or automatically,
a planter unit (24) is fitted on the pivot arm (42) and is in ground contact when the pivot arm (42) is in its working position and is swung vertically when the pivot arm (42) is in its transport position, and
a flexible pipe (26) extends between the seed container (22) and the planter unit (24), in order to feed the seeds out of the seed container (22),
**characterized in that** a first end of the pivot arm (42) is coupled to the wing frame (19, 20) by a pivot shaft (44) which comprises crank lever (48), wherein the pivot shaft (44) defines a first pivot axis about which the pivot arm (42) turns
and a linear motor (50) extends between the pivot arm (42) and the crank lever (48), in order to turn the pivot shaft (44) relative to the wing frame (19, 20) and thus swing the pivot arm (42).

2. A seeder (10) according to claim 1, **characterized in that** the pivot arm (42) has an intermediate position between the working position and the transport position, in which the planter unit (24) is no longer in ground contact.

3. A seeder (10) according to claim 1 or 2, **characterized in that** the linear motor (50) is a hydraulic cylinder.

4. A seeder (10) according to any of claims 1 to 3, **characterized in that** the planter unit (24) is attached to the pivot arm (42) by a parallelogram linkage (56) which enables the planter unit (24) to follow the ground independently of the pivot arm (42) when it is in its working position.

## Revendications

1. Semoir (10) comportant un châssis principal (18), un châssis latéral (19, 20), qui est relié de manière pivotante au châssis principal (18), de telle sorte qu'il peut pivoter depuis une configuration de travail dans une configuration de transport, un réservoir à semences (22) destiné à recevoir les semences, et un bras pivotant (42), qui est articulé en pivotement contre le châssis latéral (19, 20) et qui est mobile entre une position de travail et une position de transport,
le bras pivotant (42) pouvant être amené dans sa position de transport par l'intermédiaire d'un système d'entraînement qui déplace le châssis latéral (19, 20) ou d'un système d'entraînement séparé, pouvant être activé manuellement ou automatiquement lorsque le châssis latéral (19, 20) est amené dans la configuration de transport,
une unité d'ensemencement (24) étant disposée sur le bras pivotant (42), laquelle est en contact avec le sol lorsque le bras pivotant (42) est situé dans sa position de travail, et pivote verticalement lorsque le bras pivotant (42) est dans sa position de transport, et
un tube flexible (26) s'étend entre le réservoir à semences (22) et l'unité d'ensemencement (24) afin d'acheminer dans cette dernière les semences sortant du réservoir à semences (22),
**caractérisé en ce qu'**une première extrémité du bras pivotant (42) est couplée de manière pivotante avec le châssis latéral (19, 20) par l'intermédiaire d'un arbre de pivotement (44) qui comporte un levier coudé (48), l'arbre de pivotement (44) définissant un premier axe de pivotement autour duquel pivote le bras pivotant (42),
et un moteur linéaire (50) s'étend entre le châssis latéral (19, 20) et le levier coudé (48) afin de faire tourner l'arbre de pivotement (44) par rapport au châssis latéral (19, 20) et de faire pivoter ainsi le bras pivotant (42).

2. Semoir (10) selon la revendication 1, **caractérisé en ce que** le bras pivotant (42) possède une position intermédiaire entre la position de travail et la position de transport, dans laquelle l'unité d'ensemencement (24) n'est plus en contact avec le sol.

3. Semoir selon la revendication 1 ou 2, **caractérisé en ce que** le moteur linéaire (50) est un vérin hydraulique.

4. Semoir selon l'une quelconque des revendications 1 à 3, **caractérisé en ce que** l'unité d'ensemencement (24) est fixée contre le bras pivotant (42) au moyen d'un parallélogramme articulé (56) qui permet à l'unité d'ensemencement (24) de suivre le sol indépendamment du bras pivotant (42) lorsqu'il se trouve dans sa position de travail.
